# EUROPEAN PATENT APPLICATION

(11) **EP 2 792 436 A2**
(43) Date of publication of application: **22.10.2014**
(21) Application number: 14165204.0
(22) Date of filing: 17.04.2014
(51) Int. Cl.: B22F 3/105, B22F 7/08, C04B 35/64

(54) **Integrally formed stiffener**

(30) Priority: 19.04.2013 US 201313866423
(71) Applicant: Sikorsky Aircraft Corporation, Stratford, CT 06615 (US)
(72) Inventor: Urban, Michael R., Southbury, CT 06488 (US)
(74) Representative: Klunker . Schmitt-Nilson . Hirsch

(57) **Abstract**

A method of integrally forming at least one stiffener onto a sheet metal component configured to carry a load is provided including generating a stereolithography file. The stereolithography file includes a surface geometry of the at least one stiffener extending from a surface of the sheet-metal component. The surface geometry of the stereolithography file is sliced into a plurality of thin strips. The plurality of thin strips is substantially parallel to the surface of the sheet metal component. Energy from an energy source is applied to a powdered material such that the powdered material fuses to form the plurality of thin strips. One of the plurality of thin strips is integrally formed with the surface of the sheet-metal component. Each of the plurality of thin strips is integrally formed with an adjacent thin strip to create at least one stiffener.

## Description

Exemplary embodiments of the invention relate to structural components and, more particularly, to a stiffener configured for use with such structural components, the stiffener being formed by an additive metal fabrication process.

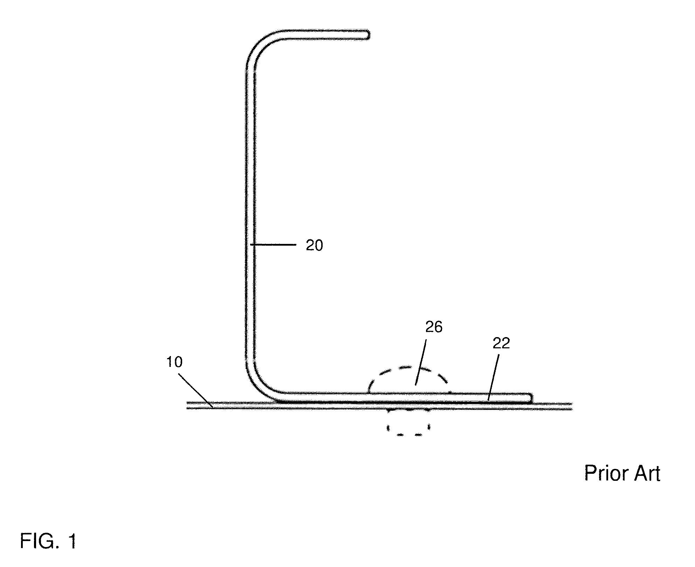

As illustrated in FIG. 1, a conventional structural stiffener 20, such as a C-channel or angle for example, is commonly used to provide reinforcement to a thin-sheet metal component 10. Using a fastener 26, a portion 22 of the structural stiffener 20 is coupled to the sheet metal component 10 in an overlapping configuration such that the thickness of the portion 22 of the structural stiffener 20 supplements the thickness of the sheet metal component 10. By increasing the thickness over which a load is applied, the load capacity of the component 10 is enhanced, and therefore the structural rigidity of the sheet metal component 10 is improved.

In applications where weight is critical, such as aircrafts or rotary-wing aircrafts for example, inclusion of such structural stiffeners significantly increases the weight of an assembly. In addition, the structural stiffeners also increase space required, the time to assemble, and the overall manufacturing cost of an assembly.

According to one embodiment of the invention, a method of integrally forming at least one stiffener onto a sheet metal component configured to carry a load is provided including generating a stereolithography file. The stereolithography file includes a surface geometry of the at least one stiffener extending from a surface of the sheet-metal component. The surface geometry of the stereolithography file is sliced into a plurality of thin strips. The plurality of thin strips is substantially parallel to the surface of the sheet metal component. Energy from an energy source is applied to a powdered material such that the powdered material fuses to form the plurality of thin strips. One of the plurality of thin strips is integrally formed with the surface of the sheet-metal component. Each of the plurality of thin strips is integrally formed with an adjacent thin strip to create at least one stiffener.

Particular embodiments may include any of the following optional features, alone or in combination:
The at least one stiffener may extend over a portion of a width of the sheet-metal component.
The at least one stiffener may extend over the entire width of the sheet-metal component.
The at least one stiffener may extend generally linearly.
The at least one stiffener may have a uniform cross-section over a width of the sheet-metal component.
The at least one stiffener may include a first stiffener and a second stiffener separated by a first distance extending in a first direction and/or a second distance extending in a second direction, substantially perpendicular to the first direction.

The energy source may be an electron beam.

The energy source may be a laser.

The powdered material may be selected from metal, metal alloy, ceramic and a composite material.

Each of the plurality of thin strips may be formed sequentially.

The method further may comprise applying a coating to the at least one stiffener and/or the sheet-metal component.

According to another embodiment of the invention, an assembly is provided including a thin sheet-metal component. At least one stiffener is integrally formed with a first surface of the sheet-metal component through an additive metal fabrication process. The at least one stiffener is configured to enhance a load carrying capability of the sheet-metal component.

Particular embodiments may include any of the following optional features, alone or in combination:
The at least one stiffener may extend over a portion of a width of the sheet-metal component.
The at least one stiffener may extend over the entire width of the sheet-metal component.
The at least one stiffener may extends generally linearly across the width of the sheet-metal component.
The at least one stiffener may have a substantially uniform cross-section taken along the width of the sheet-metal component.
The at least one stiffener may have a substantially non-uniform cross-section taken along the width of the sheet-metal component.
The at least one stiffener may include a first stiffener and a second stiffener separated by a first distance extending in a first direction.
The first stiffener and the second stiffener may be separated by a second distance extending in a second direction, the second direction being substantially perpendicular to the first direction.
The sheet-metal component may include an opening and the at least one stiffener may extend around at least a portion of a perimeter of the opening.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view of an exemplary sheet-metal component and a complementary stiffener as is known in the art;
FIG. 2 is side view of a sheet-metal component having at least one stiffener according to an embodiment of the invention;
FIG. 3 is a top view a sheet-metal component including at least one stiffener according to an embodiment of the invention;
FIG. 4 is a top view of a sheet-metal component including a cutout and at least one stiffener according to an embodiment of the invention;
FIG. 5 is a cross-section taken along A-A of FIG. 4; and
FIG. 6 is a method of manufacturing at least one stiffener on a sheet-metal component according to an embodiment of the invention.

The detailed description explains embodiments of the invention, together with advantages and features, by way of example with reference to the drawings.

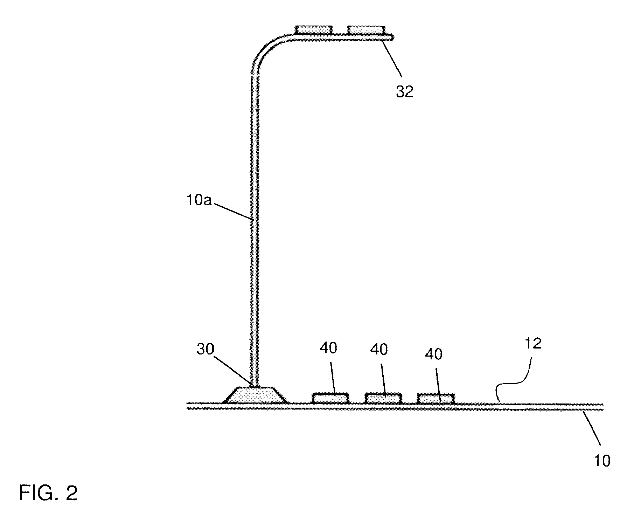

Referring now to FIG. 2, a thin sheet-metal component 10, such as a firewall panel positioned adjacent an engine of a rotary-wing aircraft for example, is illustrated. Other applications including one or more thin sheet-metal components are within the scope of the invention. Exemplary materials used to form the sheet-metal component 10 include, but are not limited to, steel, aluminum, and titanium for example. In one embodiment, the sheet-metal component has a thickness less than about .25 inches.

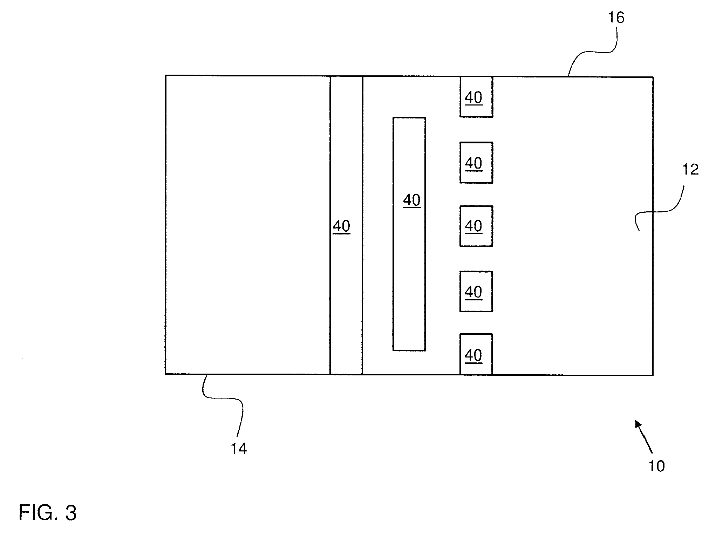

At least one stiffener 40 is arranged adjacent a first surface 12 of the sheet-metal component 10, for example adjacent the portion of the component 10 configured to experience the greatest stress when a load is applied thereto. In one embodiment, a plurality of stiffeners 40 is arranged on the first surface 12 of the component 10, the plurality of stiffeners 40 being separated from one another by a distance in a first direction. The plurality of stiffeners 40 may be substantially identical or may be distinct. The at least one stiffener 40 may be configured to extend over the entire width of the sheet-metal component 10, or may be configured to extend over only a portion thereof. In embodiments where the width of a stiffener 40 is less than the width of the sheet-metal component 10, the stiffener 40 may be arranged adjacent an edge, such as opposing edges 14 and 16 for example, or alternatively, may be arranged generally centrally about the sheet-metal component 10 (FIG. 3).

In one embodiment, the at least one stiffener 40 is generally rectangular in shape and has a substantially constant cross-section over the width of the sheet-metal component 10. However, a stiffener 40 having a cross-section that varies over the width of the sheet-metal component 10 is also within the scope of the invention. In one embodiment, more than one stiffener 40 is arranged across the width of the sheet-metal component 10. The more than one stiffener 40 may be arranged substantially linearly such that a space exists between adjacent stiffeners 40, the space extending in a second direction, perpendicular to the first direction.

Referring again to FIG. 2, in the embodiment, a second sheet-metal component 10a, such as a web for example, extends generally perpendicularly from the first sheet-metal component 10. A first end 30 of the second sheet-metal component 10a may be coupled to the first sheet-metal component 10, such as through a welding or an additive metal fabrication process for example. Additional stiffeners 40 may be arranged over a portion of the second sheet-metal component 10a, such as adjacent the second end 32 as illustrated for example, to improve the rigidity and load carrying capability thereof.

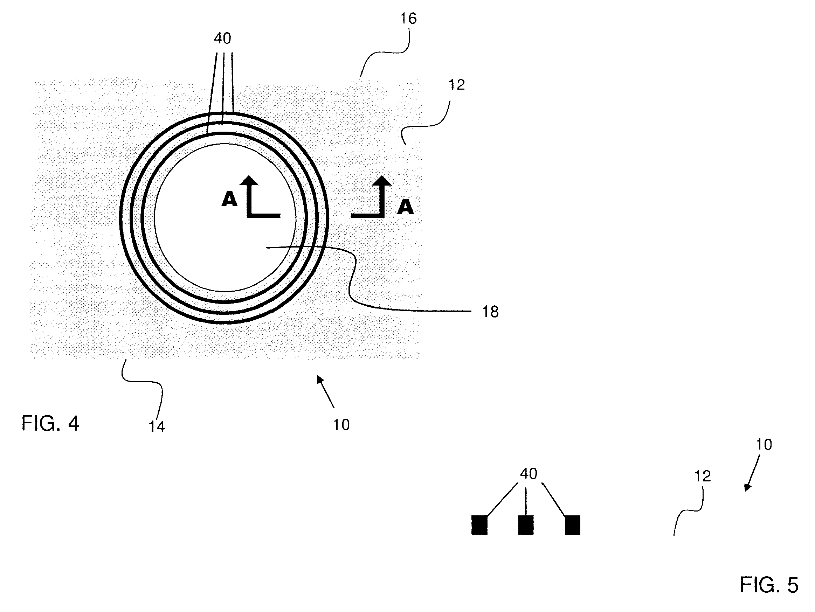

In another embodiment, illustrated in FIGS. 4 and 5, the at least one stiffener 40 may be arranged about at least a portion of the perimeter of a cutout or opening 18 formed in the sheet-metal component 10. In embodiments including a plurality of stiffeners 40, the stiffeners 40 may be similar in shape and arranged substantially concentrically around the cutout 18. The height and width of each of the plurality of stiffeners 40 may be substantially identical, or distinct. The cross-section of each stiffener 40 may be uniform, or may vary about the periphery of the cutout 18.

The plurality of stiffeners 40 may be formed integrally with the sheet-metal component 10 through an additive metal fabrication process that applies light energy to a generally powdered material, such as a powered metal, metal alloy, or composite material for example, to form a shape. Exemplary additive metal fabrication processes include, but are not limited to, direct metal laser sintering (DMLS), selective laser sintering (SLS), and electron beam melting (EBM) for example.

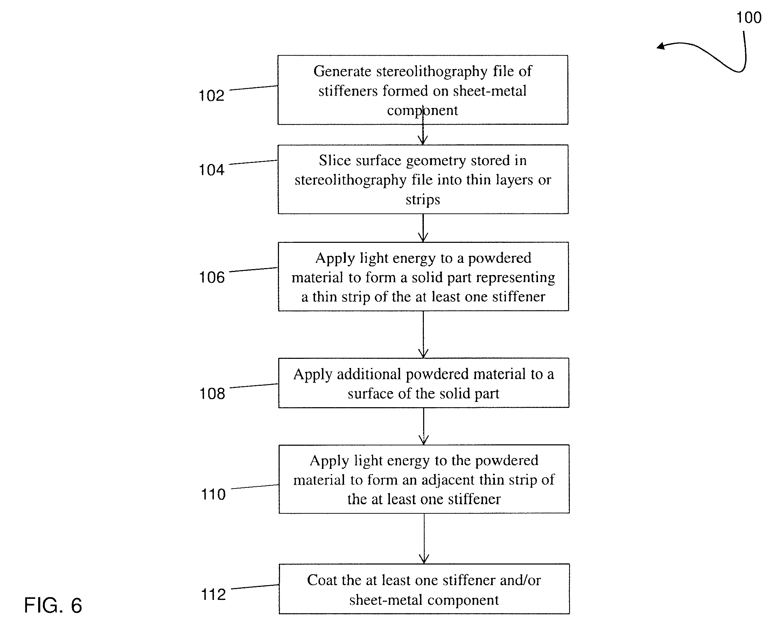

Referring now to FIG. 6, a method 100 of fabricating a plurality of stiffeners 40 onto a sheet-metal component 10 is described. In block 102, a stereolithography file that describes the plurality of stiffeners 40 is generated, for example based on a three dimensional model of the sheet-metal component 10 and stiffeners 40 created using a computer aided design (CAD) software. The size and position of each stiffener 40 is selected to prevent the localized heat generated through the formation process from deforming the sheet-metal component 10. The stereolithography file is provided as an input to a pre-processing software configured to slice the surface geometry of the stiffeners 40 into a plurality of thin layers or strips as illustrated in block 104. In one embodiment, each of the plurality of thin strips is arranged generally parallel to the first surface of the sheet-metal component 10. In embodiments having more than one stiffener 40, one of the plurality of strips may include a portion of each of the plurality of stiffeners 40. The thickness of each of the plurality of thin strips will vary depending on the specific additive metal fabrication process used, as well as the size of the stiffeners 40. For example, if the stiffeners 40 are fabricated using direct metal laser sintering, the plurality of strips may have a thickness of about .020 inches, whereas if the stiffeners 40 are fabricated using electron beam melting, the plurality of strips may have a thickness of about .040 inches.

In block 106, after the model of the stiffeners 40 has been sliced into a plurality of strips, energy from an energy source is applied to a portion of a powdered material on the first surface of the sheet-metal component. Examples of the energy source include but are not limited to, an electron beam, a laser, or any other suitable light source known to a person having ordinary skill in the art for example. The energy or heat from the energy source locally melts the powdered material such that the powdered material fuses into a plurality of substantially solid parts. Each fused solid part is a generally two-dimensional section representing a thin strip of each of the plurality of stiffeners 40. In embodiments including more than one stiffener 40, a portion of a first stiffener within the first strip may be fabricated, and then a portion of a second stiffener within the first strip may be fabricated. Additional powdered material is arranged on a surface of the fused solid parts in block 108. Similar to block 106, in block 110, energy from the energy source is again applied to the powered material to form an adjacent thin strip of the stiffeners 40. The addition of powered material in block 108 and the application of energy to the powered material in block 110 are generally repeated until each of the plurality of thin strips from the stereolithography file has been fabricated. Because the strips of the at least one stiffener 40 are built sequentially, each thin strip is integrally formed with another adjacent thin strip to form the one or more stiffeners 40. In one embodiment, a protective coating may be applied to the stiffeners 40 and/or the sheet-metal component 10 based on the intended application of the sheet-metal component 10, as illustrated in block 112.

Use of stiffeners 40 integrally formed with the sheet-metal component 10 through an additive metal fabrication process reduces the overall number of parts and complexity of the assembly. As a result, the tooling and hours required to fabricate the sheet-metal component 10 and the stiffeners 40 are significantly reduced. In addition, by selectively applying stiffeners 40 to only the portion of the sheet-metal component that experiences higher loads, the overall weight of the assembly may be reduced.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method (100) of integrally forming at least one stiffener (40) onto a sheet-metal component (10) configured to carry a load, comprising:
generating (102) a stereolithography file including a surface geometry of the at least one stiffener (40) extending from a surface (12) of the sheet-metal component (10);
slicing (104) the surface geometry of the stereolithography file into a plurality of thin strips, the plurality of thin strips being substantially parallel to the surface of the sheet-metal component (10); and
applying (106) energy from an energy source to a powdered material such that the powdered material fuses to form the plurality of thin strips, wherein one of the plurality of thin strips is integrally formed with the surface (12) of the sheet-metal component (40) and each of the plurality of thin strips is integrally formed with an adjacent thin strip to create at least one stiffener (40).

2. The method (100) according to claim 1, wherein the at least one stiffener (40) extends over a portion of a width of the sheet-metal component (10); and/or wherein the at least one stiffener (40) extends over the entire width of the sheet-metal component (10); and/or wherein the at least one stiffener (40) extends generally linearly.

3. The method (100) according to claim 1 or 2, wherein the at least one stiffener (40) has a uniform cross-section over a width of the sheet-metal component (10).

4. The method (100) according to any of claims 1 to 3, wherein the at least one stiffener (40) includes a first stiffener and a second stiffener separated by a first distance extending in a first direction and/or a second distance extending in a second direction, substantially perpendicular to the first direction.

5. The method (100) according to any of claims 1 to 4, wherein the energy source is an electron beam and/or a laser.

6. The method (100) according to any of claims 1 to 5, wherein the powdered material is selected from metal, metal alloy, ceramic and a composite material.

7. The method (100) according to any of claims 1 to 6, wherein each of the plurality of thin strips is formed sequentially.

8. The method (100) according to any of claims 1 to 7, further comprising applying a coating to the at least one stiffener (40) and/or to the sheet-metal component (10).

9. An assembly comprising:
a thin sheet-metal component (10); and
at least one stiffener (40) integrally formed with a first surface (12) of the sheet-metal component (10) through an additive metal fabrication process, the at least one stiffener (40) being configured to enhance a load carrying capability of the sheet-metal component (10).

10. The assembly according to claim 9, wherein the at least one stiffener (40) extends over a portion of a width of the sheet-metal component (10) and/or wherein the at least one stiffener (40) extends over the entire width of the sheet-metal component (10); and/or wherein the at least one stiffener (40) extends generally linearly across the width of the sheet-metal component (10).

11. The assembly according to claim 10 or 9, wherein the at least one stiffener (40) has a substantially uniform cross-section taken along the width of the sheet-metal component (10).

12. The assembly according to any of claims 9 to 11, wherein the at least one stiffener (40) has a substantially non-uniform cross-section taken along the width of the sheet-metal component (10).

13. The assembly according to any of claims 9 to 12, wherein at least one stiffener (40) includes a first stiffener and a second stiffener separated by a first distance extending in a first direction.

14. The assembly according to claim 13, wherein the first stiffener and the second stiffener are separated by a second distance extending in a second direction, the second direction being substantially perpendicular to the first direction.

15. The assembly according to any of claims 9 to 14, wherein the sheet-metal component (10) includes an opening and the at least one stiffener (40) extends around at least a portion of a perimeter of the opening.
